# EUROPÄISCHE PATENTSCHRIFT

(11) **EP 3 914 783 B1**
(45) Veröffentlichungstag und Bekanntmachung des Hinweises auf die Patenterteilung: **21.12.2022**
(21) Anmeldenummer: 19702356.7
(22) Anmeldetag: 22.01.2019
(51) Int. Cl.: E03C 1/02

(54) **ARMATURENANSCHLUSSSTÜCK**
COUPLING FOR FITTING
PIÈCE DE RACCORDEMENT POUR UNE ARMATURE

(43) Veröffentlichungstag der Anmeldung: 01.12.2021
(73) Patentinhaber: Oblamatik AG, 7000 Chur (CH)
(72) Erfinder: KNUPFER, Daniel, 7203 Trimmis (CH); OBRIST, Roland, 7412 Scharans (CH)
(74) Vertreter: Troesch Scheidegger Werner AG
(86) Internationale Anmeldenummer: PCT/EP2019/051432
(87) Internationale Veröffentlichungsnummer: WO 2020/151808

(56) Entgegenhaltungen:
- WO-A1-2005/061806
- DE-A1-102004 040 084
- DE-A1-102007 002 235

## Beschreibung

Die vorliegende Erfindung betrifft ein Armaturenanschlussstück. Unter diesem Begriff wird in der Sanitärtechnik ein Gegenstand verstanden, für welchen mit ähnlicher oder synonymer Bedeutung auch die folgenden Bezeichnungen gebräuchlich sind: Grundeinheit, Anschlusseinheit oder Anschlusskörper. Verwendet wird auch die Bezeichnung «Unterputz-Einbaukörper», weil dieser Gegenstand üblicherweise unter dem Verputz einer Wand eingebaut wird (so dass keine Wasserleitungen und Anschlüsse offenliegen) und als Basis für eine daran montierbare Funktionseinheit bzw. Sanitärarmatur dient. Der spezifische Begriff «Armaturenanschlussstück» bezeichnet den Gegenstand der vorliegenden Erfindung am besten, während die anderen Bezeichnungen teilweise keine genauen Definitionen darstellen und manchmal offenlassen, ob das Gehäuse zur Aufnahme von Armaturenanschlussstück und Funktionseinheit bzw. die Montagebox mit Befestigungseinrichtung für die Unterputz-Installation auch dazugezählt werden. Ein Armaturenanschlussstück kann als Kern einer Grundeinheit betrachtet werden.

Ein Armaturenanschlussstück umfasst einen Basiskörper und weist Anschlussstutzen für Wasserleitungen auf und ist im Inneren des Basiskörpers mit Bohrungen oder Kanälen versehen, durch welche jeder Anschlussstutzen mit jeweils einer zugeordneten Öffnung in einer Passfläche auf dem Basiskörper des Armaturenanschlussstücks verbunden ist. Auf dem Basiskörper-Bereich mit den Passflächen ist eine Funktionseinheit mit entsprechenden, komplementär angeordneten Öffnungen montierbar.

Die Funktionseinheiten, welche auf dem Armaturenanschlussstück montiert werden können, umfassen in der Regel sanitäre Ventile, insbesondere Mischventile, um beispielsweise Wasser vom Kaltwasser-Anschluss und vom Warmwasser-Anschluss des Armaturenanschlussstücks in einem bestimmten Verhältnis zu mischen und das Mischwasser mit einer gewünschten Mischtemperatur über mindestens einen Anschluss des Armaturenanschlussstücks abzuleiten. Die Funktionseinheiten können von Hand mit einem Hebel (Einhebelmischer), oder durch einen Thermostat, oder über ein elektronisches Bedienelement durch einen motorischen Antrieb betätigt werden.

Armaturenanschlussstücke weisen mindestens drei Anschlussstutzen auf, nämlich für Kaltwasser und Warmwasser, sowie für mindestens einen Mischwasser-Ausgang. Oft sind es zwei Mischwasser-Ausgänge, weil Armaturenanschlussstücke häufig im Badezimmer installiert werden, wo bei einer Dusche der Auslauf des Mischwassers über die Kopfbrause und/oder die Handbrause gewählt werden kann, oder bei einer Badewanne, wo mit der Wannenarmatur zwischen dem Badewannen-Einlauf und einer Brause gewählt werden kann. Die Dusch- oder Wannenarmatur mit der Funktionseinheit wird auf das in der Wand eingebaute Armaturenanschlussstück montiert.

In der EP 1 382 757 B1 ist eine Installationseinrichtung für Sanitärelemente beschrieben. Für einen zylindrischen Unterputzkasten einer Sanitärarmatur wird ein z.B. über ein Schraubgewinde axial verstellbarer Flanschring vorgeschlagen, um so den Abstand zwischen dem Flanschring und dem vorderen Rand des Unterputzkastens an die Dicke der Wand anpassen zu können. Wie auch aus den Abbildungen der EP 1 382 757 B1 ersichtlich ist, weist das im Unterputzkasten untergebrachte Armaturenanschlussstück vier radiale und rechtwinklig zueinander angeordnete Anschlüsse für Wasserleitungen auf.

Die DE 10 2004 040 084 B4 beschreibt eine sanitäre Unterputzarmatur mit einem Anschlusskörper. Auch hier wird ein verstellbarer Befestigungsring vorgesehen, um damit die Einbautiefe des Anschlusskörpers in der Einbauöffnung der Wand genau einstellen zu können. Dieser Befestigungsring weist mindestens eine radial nach innen vorstehende Bajonettklaue auf. An der hinteren Seite sind vier Anschlussstutzen radial und rechtwinklig zueinander in den Anschlusskörper eingeführt, wie auch in den Figuren dargestellt. Diese Anschlussstutzen sind mit in der Wand verlegten Wasserrohren verbindbar.

In der EP 2 143 846 B1 wird eine Einbauvorrichtung für eine Unterputzdose für Sanitärinstallationen vorgeschlagen, bei welcher der Befestigungsring aus zwei starren Flanschteilen besteht, die bei der Montage miteinander zusammengefügt werden. Dadurch wird die Montage des Gehäuses an der Wand etwas einfacher, weil die zwei Flanschteile von der Seite aufgeschoben werden können, und dann durch Rasthaken in der Schliessstellung zusammengehalten werden. Gemäss den Figuren weisen die hier eingesetzten Armaturenanschlussstücke radial abstehende und rechtwinklig zueinander angeordnete Anschlussstutzen auf.

EP 2 853 643 A1 beschreibt einen Anschlusskörper für eine sanitäre Unterputzarmatur. Durch eine verstellbare Befestigungseinrichtung ist der Anschlusskörper in unterschiedlichen Einbautiefen befestigbar. Hier wird ein Befestigungsring aus elastischflexiblem Material verwendet, der an einer Unterbrechungsstelle geöffnet und elastisch so aufgeweitet werden kann, dass er von der Seite her auf den Gehäuseumfang des Anschlusskörpers aufschiebbar ist, und die beiden Enden sodann übereinander geführt und aneinander fixiert werden. Wie auch aus den Figuren hervorgeht, weist das Armaturenanschlussstück vier radiale und rechtwinklig zueinander angeordnete Anschlussstutzen für Wasserrohre auf.

Die WO 2005/061806 A1 offenbart ein Armaturenanschlussstück mit Anschlussstutzen, welche während der Montage bezüglich eines Basiskörpers beweglich sind, jedoch nach der Montage des Armaturenanschlussstücks fixiert sind.

Die DE 10 2007 002 235 A1 beschreibt ein Armaturenanschlussstück mit fixierten Anschlussstutzen, welche mit flexiblen Leitungen mit einem Basiskörper verbunden sind.

Den aus dem Stand der Technik bekannten Grundeinheiten ist gemeinsam, dass zwar einige Vorschläge für eine leichtere Montage der Unterputzdosen gemacht wurden, dass aber die Anschlussstutzen für die Wasserleitungen an den Armaturenanschlussstücken immer radial fix angeordnet sind. Letzteres bedingt, dass die Wasserleitungen in der Wand jeweils genau auf diese Fixpunkte hin ausgerichtet werden müssen, was beim Verlegen und Anschliessen der Wasserleitungen schwierig sein kann. Es müssen bei der Leitungsführung zum Teil Umwege in Kauf genommen werden, und nach dem Anschliessen der Wasserrohre können mechanische Spannungen in der Installation verbleiben.

Aufgabe der vorliegenden Erfindung ist es, ein alternatives Armaturenanschlussstück zur Verfügung zu stellen, welches das Anschliessen der Wasserleitungen erleichtert.

Diese Aufgabe wird durch ein Armaturenanschlussstück mit den Merkmalen des Anspruchs 1 gelöst.

Die Erfindung umfasst zudem Verwendungen des erfindungsgemässen Armaturenanschlussstücks.

Bevorzugte erfindungsgemässe Ausführungsformen und Varianten ergeben sich aus den jeweils abhängigen Ansprüchen.

Ein erfindungsgemässes Armaturenanschlussstück umfasst einen Basiskörper mit Anschlussstutzen für Wasserleitungen und einen Basiskörper-Bereich mit Passflächen für eine Funktionseinheit, wobei durch Kanäle im Inneren des Basiskörpers jeder Anschlussstutzen mit jeweils einer zugeordneten Öffnung in einer Passfläche verbunden ist, und auf dem Basiskörper-Bereich mit den Passflächen eine Funktionseinheit mit komplementär angeordneten Öffnungen montierbar ist, wobei die Anschlussstutzen im oder am Basiskörper beweglich gelagert sind.

Bei einem erfindungsgemässen Armaturenanschlussstück sind in einer Ausführungsform die Anschlussstutzen mit Gelenken schwenkbar ausgeführt. Bevorzugt sind die Gelenke der Anschlussstutzen beim erfindungsgemässen Armaturenanschlussstück Drehgelenke.

Vorzugsweise sind beim erfindungsgemässen Armaturenanschlussstück die Drehgelenke im oder am Basiskörper um den Basiskörper-Bereich mit den Passflächen herum angeordnet, wobei die Anschlussstutzen zunächst senkrecht vom Basiskörper wegführen und dann in einem rechten Winkel gebogen sind.

In einer Ausführungsform des erfindungsgemässen Armaturenanschlussstück hat der Basiskörper einen im Wesentlichen viereckigen Grundriss, wobei in den Eckbereichen vier Anschlussstutzen angeordnet sind und sich der Basiskörper-Bereich mit den Passflächen im Mittelfeld des Grundrisses befindet.

Bei einem erfindungsgemässen Armaturenanschlussstück weisen Anschlussstutzen mit einem Drehgelenk einen Drehbereich bevorzugt von bis zu 120 Winkelgraden, besonders bevorzugt von bis zu 90 Winkelgraden auf.

In einer anderen erfindungsgemässen Ausführungsform des Armaturenanschlussstücks sind die Anschlussstutzen mit einem Kugelgelenk schwenkbar ausgeführt, bevorzugt um bis zu 90 Winkelgrade.

Beim erfindungsgemässen Armaturenanschlussstück ist der Basiskörper mit den Anschlussstutzen bevorzugt aus Messing, Rotguss oder Edelstahl gefertigt.

Die vorliegende Erfindung umfasst auch die Verwendung eines erfindungsgemässen Armaturenanschlussstücks für Sanitärinstallationen.

Bei dieser Verwendung umfassen die Sanitärinstallationen vorzugsweise einen Kaltwasser- und einen Warmwasser-Anschluss an den betreffenden Anschlussstutzen des Armaturenanschlussstücks, sowie ein, zwei oder mehr Ausgänge an entsprechenden Anschlussstutzen für Mischwasser, welches von einer auf dem Basiskörper-Bereich mit den Passflächen des Armaturenanschlussstücks montierten Funktionseinheit mit Mischventil bereitgestellt wird.

Solche Sanitärinstallationen werden bevorzugt für Unterputz-Sanitärinstallationen in Badezimmern für Duschen und/oder Badewannen verwendet.

Anzumerken ist, dass eine Funktionseinheit entweder direkt oder gegebenenfalls mit einer dazwischen liegenden Adapterplatte an einem erfindungsgemässen Armaturenanschlussstück montiert werden kann. Mittels einer Adapterplatte könnte eine eventuell nicht übereinstimmende Lochanordnung der Öffnungen zwischen den Passflächen des Armaturenanschlussstücks und einer Funktionseinheit überbrückt werden.

In einer speziellen Ausführungsform der Erfindung könnte ein erfindungsgemässes Armaturenanschlussstück mit beweglichen Anschlussstutzen auch integral zusammen mit einer Funktionseinheit ausgebildet sein.

Im Folgenden wird die Erfindung anhand von schematischen Figuren näher erläutert, die Beispiele darstellen, ohne den Umfang der vorliegenden Erfindung einzuschränken. Dabei zeigt:
- Fig. 1: ein erfindungsgemässes Armaturenanschlussstück in einer perspektivischen Ansicht;
- Fig. 2: ein erfindungsgemässes Armaturenanschlussstück in einer Draufsicht (Grundriss);
- Fig. 3: ein erfindungsgemässes Armaturenanschlussstück in einer Seitenansicht;
- Fig. 4: ein erfindungsgemässes Armaturenanschlussstück mit Blick auf einen Schnitt in der Ebene C-C (vgl. Fig. 3);
- Fig. 5: ein erfindungsgemässes Armaturenanschlussstück in einem Querschnittsprofil durch die Schnittebenen A-A (vgl. Fig. 2);
- Fig. 6: einen vergrösserten Ausschnitt E aus der Fig. 5 mit einem schwenkbaren Anschlussstutzen am Basiskörper.

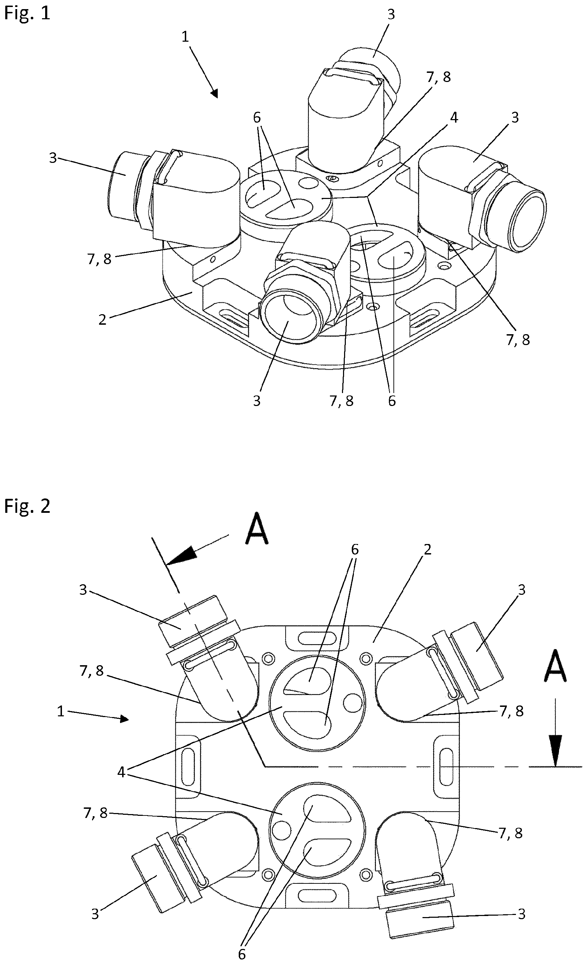

Die Figur 1 zeigt ein erfindungsgemässes Armaturenanschlussstück 1 in einer perspektivischen Ansicht. Zu sehen ist eine Ausführungsform mit vier Anschlussstutzen 3, die mit Drehgelenken 7,8 schwenkbar im Basiskörper 2 gelagert sind. In den Passflächen 4 sind die Öffnungen 6 sichtbar, die im Inneren des Basiskörpers 2 mit den Anschlussstutzen 3 verbundenen sind. Die Passflächen 4 mit den Öffnungen 6 sind hier als Erhebungen ausgebildet. Die eine Erhebung mit zwei Öffnungen 6 entspricht den beiden Eingängen für Warmwasser und Kaltwasser, und die andere Erhebung umfasst zwei Öffnungen 6 entsprechend zwei Mischwasser-Ausgängen. Auf dem Basiskörper-Bereich mit den Passflächen 4 wäre eine Funktionseinheit mit komplementär angeordneten Öffnungen montierbar.

Die Figur 2 zeigt das erfindungsgemässe Armaturenanschlussstück 1 von Figur 1 in einer Draufsicht. In der Draufsicht ist der bei dieser Ausführungsform im Wesentlichen viereckige Grundriss des Basiskörpers 2 gut zu sehen, wobei die Ecken gerundet sind. In dieser Ansicht ist auch der bevorzugte Drehbereich von bis zu 90 Winkelgraden für die Anschlussstutzen 3 gut sichtbar. Ersichtlich ist zudem, dass sich bei dieser Ausführungsform der Basiskörper-Bereich mit den Passflächen 4 im Mittelfeld des Grundrisses befindet, zwischen den vier in den Eckbereichen angeordneten Anschlussstutzen 3.

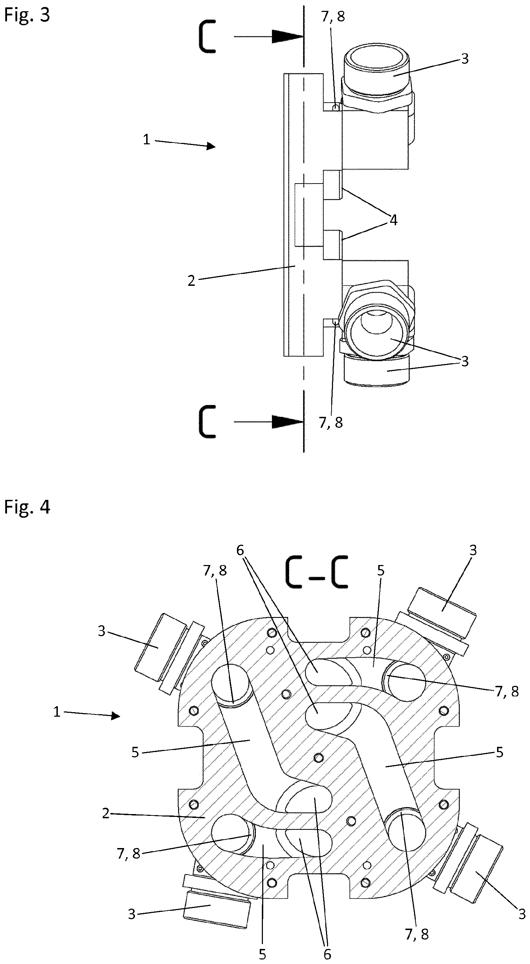

Die Figur 3 zeigt das erfindungsgemässe Armaturenanschlussstück 1 der vorangegangenen Figuren in einer Seitenansicht. In der Seitenansicht sind einerseits die um den Basiskörper-Bereich mit den Passflächen 4 herum angeordneten Drehgelenke 7,8 gut zusehen, und auch die zunächst senkrecht vom Basiskörper 2 wegführenden Anschlussstutzen 3, welche dann in einem rechten Winkel gebogen sind.

Die Figur 4 erlaubt einen Blick ins Innere des Basiskörpers 2 und zeigt ein erfindungsgemässes Armaturenanschlussstück 1 mit Blick auf einen Schnitt in der Ebene C-C (vgl. Fig. 3). In diesem Schnitt sind die Kanäle 5 zu sehen, welche im Inneren des Basiskörpers 2 jeden Anschlussstutzen 3 mit jeweils einer zugeordneten Öffnung 6 in einer Passfläche 4 verbinden. Der Basiskörper-Bereich mit den Passflächen 4 ist in dieser Ansicht verdeckt, aber man sieht sozusagen von unten die Öffnungen 6 sowie die Drehgelenke 7,8 der Anschlussstutzen 3.

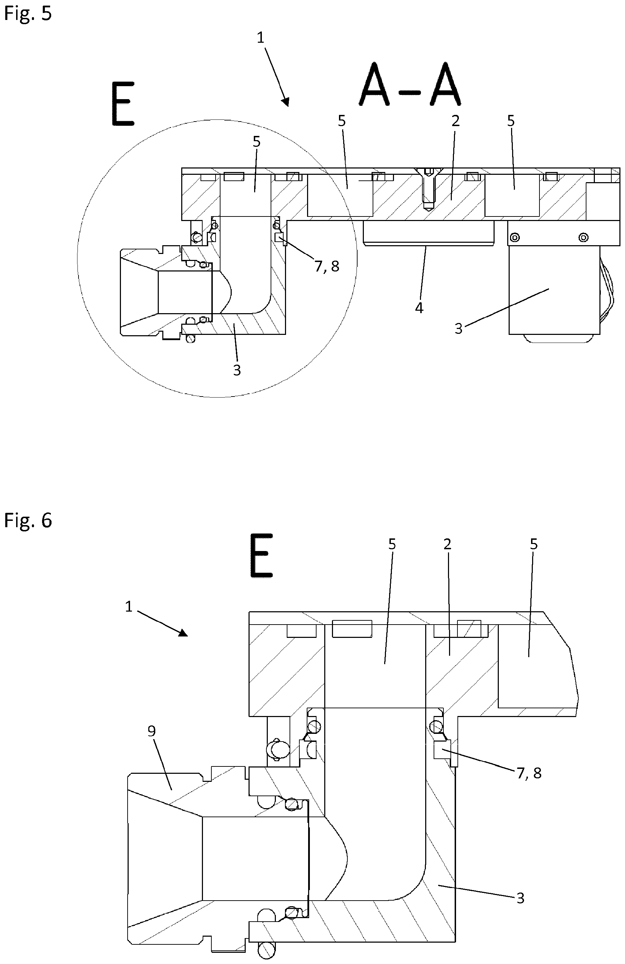

Figur 5 zeigt das erfindungsgemässe Armaturenanschlussstück 1 der vorangegangenen Figuren in einem Querschnittsprofil durch die Schnittebenen A-A (vgl. Fig. 2). Hier erkennt man einerseits quergeschnittene Kanäle 5 im Inneren des Basiskörpers 2, und andererseits einen Anschlussstutzen 3 in einem axialen Querschnitt. Ersichtlich ist auch das im bzw. am Basiskörper 2 gelagerte Drehgelenk 7,8.

Figur 6 zeigt den Ausschnitt E aus der Fig. 5 mit dem schwenkbaren Anschlussstutzen 3 am Basiskörper 2 in einer Vergrösserung. Neben dem Drehgelenk 7,8 und gewissen Dichtungsringen ist überdies ein Gewindeanschluss 9 des Anschlussstutzens 3 gut zu sehen.

An diesem Gewindeanschluss 9 kann eine Wasserleitung zum Beispiel mit einer Überwurfmutter befestigt werden. Der Gewindeanschluss 9 kann entweder wie dargestellt ein eingestecktes Teil oder ein integrales Teil des Anschlussstutzens 3 sein.

An dieser Stelle soll darauf hingewiesen werden, dass beliebige Kombinationen der beschriebenen und/oder in den Figuren gezeigten Merkmale zum Umfang der vorliegenden Erfindung gehören, solange die Kombinationen nicht inkonsistent sind.

Wie der Beschreibung und den Erläuterungen zu den Figuren zu entnehmen ist, wird mit der vorliegenden Erfindung eine vorteilhafte, flexible und einfach anzuschliessende alternative Lösung für ein Armaturenanschlussstück zur Verfügung gestellt.

### Bezugszeichenliste

Gleiche Bezugszeichen in den Figuren deuten auf entsprechende Merkmale hin, auch wenn in der Beschreibung der einzelnen Figuren nicht in jedem Fall ausdrücklich darauf Bezug genommen wird.
- 1: Armaturenanschlussstück
- 2: Basiskörper des Armaturenanschlussstücks 1
- 3: Anschlussstutzen des Basiskörpers 2
- 4: Passflächen
- 5: Kanal im Inneren des Basiskörpers 2
- 6: Öffnungen in den Passflächen 4
- 7: Gelenk des Anschlussstutzens 3
- 8: Drehgelenk
- 9: Gewindeanschluss des Anschlussstutzens 3

## Patentansprüche

1. Armaturenanschlussstück (1) umfassend einen Basiskörper (2) mit Anschlussstutzen (3) für Wasserleitungen und einem Basiskörper-Bereich mit Passflächen (4) für eine Funktionseinheit, wobei durch Kanäle (5) im Inneren des Basiskörpers (2) jeder Anschlussstutzen (3) mit jeweils einer zugeordneten Öffnung (6) in einer Passfläche (4) verbunden ist, und auf dem Basiskörper-Bereich mit den Passflächen (4) eine Funktionseinheit mit komplementär angeordneten Öffnungen montierbar ist, **dadurch gekennzeichnet, dass** die Anschlussstutzen (3) im oder am Basiskörper (2) beweglich gelagert sind.

2. Armaturenanschlussstück (1) nach Anspruch 1, **dadurch gekennzeichnet, dass** die Anschlussstutzen (3) mit Gelenken (7) schwenkbar ausgeführt sind.

3. Armaturenanschlussstück (1) nach Anspruch 2, **dadurch gekennzeichnet, dass** die Gelenke (7) der Anschlussstutzen (3) Drehgelenke (8) sind.

4. Armaturenanschlussstück (1) nach Anspruch 3, **dadurch gekennzeichnet, dass** die Drehgelenke (8) im oder am Basiskörper (2) um den Basiskörper-Bereich mit den Passflächen (4) herum angeordnet sind, wobei die Anschlussstutzen (3) zunächst senkrecht vom Basiskörper (2) wegführen und dann in einem rechten Winkel gebogen sind.

5. Armaturenanschlussstück (1) nach einem der vorhergehenden Ansprüche, **dadurch gekennzeichnet, dass** der Basiskörper (2) einen im Wesentlichen viereckigen Grundriss hat, wobei in den Eckbereichen vier Anschlussstutzen (3) angeordnet sind und sich der Basiskörper-Bereich mit den Passflächen (4) im Mittelfeld des Grundrisses befindet.

6. Armaturenanschlussstück (1) nach Anspruch 3, **dadurch gekennzeichnet, dass** die Drehgelenke (8) einen Drehbereich von bis zu 120 Winkelgraden, bevorzugt von bis zu 90 Winkelgraden aufweisen.

7. Armaturenanschlussstück (1) nach Anspruch 2, **dadurch gekennzeichnet, dass** die Anschlussstutzen (3) mit einem Kugelgelenk schwenkbar ausgeführt sind, bevorzugt um bis zu 90 Winkelgrade.

8. Armaturenanschlussstück (1) nach einem der vorhergehenden Ansprüche, **dadurch gekennzeichnet, dass** der Basiskörper (2) mit den Anschlussstutzen (3) aus Messing, Rotguss oder Edelstahl gefertigt ist.

9. Verwendung eines Armaturenanschlussstücks (1) nach einem der Ansprüche 1 bis 8 für Sanitärinstallationen.

10. Verwendung nach Anspruch 9, **dadurch gekennzeichnet, dass** die Sanitärinstallationen einen Kaltwasser- und einen Warmwasser-Anschluss an den betreffenden Anschlussstutzen (3) des Armaturenanschlussstücks (1) umfassen, sowie ein, zwei oder mehr Ausgänge an entsprechenden Anschlussstutzen (3) für Mischwasser, welches von einer auf dem Basiskörper-Bereich mit den Passflächen (4) des Armaturenanschlussstücks (1) montierten Funktionseinheit mit Mischventil bereitgestellt wird.

11. Verwendung nach Anspruch 9 oder 10 für Unterputz-Sanitärinstallationen in Badezimmern für Duschen und/oder Badewannen.

## Claims

1. Fitting connector (1) comprising a base body (2) with connecting pieces (3) for water lines and a base body region with fitting surfaces (4) for a functional unit, wherein each connecting piece (3) being connected by channels (5) in the interior of the base body (2) to a respective associated opening (6) in one fitting surface (4), and a functional unit with complementarily arranged openings can be mounted on the base body region with the fitting surfaces (4), **characterized in that** the connecting pieces (3) are movably mounted in or on the base body (2).

2. Fitting connector (1) according to claim 1, **characterized in that** the connecting pieces (3) are designed to be pivotable by means of joints (7).

3. Fitting connector (1) according to claim 2, **characterized in that** the joints (7) of the connecting pieces (3) are swivel joints (8).

4. Fitting connector (1) according to claim 3, **characterized in that** the swivel joints (8) are arranged in or on the base body (2) around the base body region with the fitting surfaces (4), wherein the connecting pieces (3) first leading away from the base body (2) perpendicularly and then being bent at a right angle.

5. Fitting connector (1) according to one of the preceding claims, **characterized in that** the base body (2) has a substantially quadrangular outline, wherein four connecting pieces (3) being arranged in the corner regions, and the base body region with the fitting surfaces (4) being located in the central field of the outline.

6. Fitting connector (1) according to claim 3, **characterized in that** the swivel joints (8) have a rotation range of up to 120 angular degrees, preferably of up to 90 angular degrees.

7. Fitting connector (1) according to claim 2, **characterized in that** the connecting pieces (3) are designed to be pivotable with a ball joint, preferably by up to 90 angular degrees.

8. Fitting connector (1) according to one of the preceding claims, **characterized in that** the base body (2) with the connecting pieces (3) is made of brass, gunmetal or stainless steel.

9. Use of a fitting connector (1) according to any one of claims 1 to 8 for sanitary installations.

10. Use according to claim 9, **characterized in that** the sanitary installations comprise a cold water connection and a hot water connection to the respective connecting pieces (3) of the fitting connector (1), as well as one, two or more outlets on respective connecting pieces (3) for mixed water, which is provided by a functional unit with mixing valve mounted on the base body region with the fitting surfaces (4) of the fitting connector (1).

11. Use according to claim 9 or 10 for concealed sanitary installations in bathrooms for showers and/or bathtubs.

## Revendications

1. Raccord de robinetterie (1) comprenant un corps de base (2) avec des tubulures de raccordement (3) pour des conduites d'eau et une zone de corps de base avec des surfaces d'ajustement (4) pour une unité fonctionnelle, où chaque tubulure de raccordement (3) étant reliée par des canaux (5) à l'intérieur du corps de base (2) à une ouverture (6) associée dans une surface d'ajustement (4), et une unité fonctionnelle avec des ouvertures disposées de manière complémentaire peut être montée sur la zone de corps de base avec les surfaces d'ajustement (4), **caractérisé en ce que** les tubulures de raccordement (3) sont montées de manière mobile dans ou sur le corps de base (2).

2. Raccord de robinetterie (1) selon la revendication 1, **caractérisé en ce que** les tubulures de raccordement (3) sont réalisées de manière à pouvoir pivoter avec des articulations (7).

3. Raccord de robinetterie (1) selon la revendication 2, **caractérisé en ce que** les articulations (7) des tubulures de raccordement (3) sont des articulations tournantes (8).

4. Raccord de robinetterie (1) selon la revendication 3, **caractérisé en ce que** les articulations tournantes (8) sont disposées dans ou sur le corps de base (2) autour de la zone de corps de base comportant les surfaces d'ajustement (4), où les tubulures de raccordement (3) s'éloignant d'abord perpendiculairement du corps de base (2) et étant ensuite pliées à angle droit.

5. Raccord de robinetterie (1) selon l'une des revendications précédentes, **caractérisé en ce que** le corps de base (2) a un plan essentiellement quadrangulaire, où quatre tubulures de raccordement (3) étant disposées dans les zones d'angle et la zone de corps de base avec les surfaces d'ajustement (4) se trouvant dans le champ central du plan.

6. Raccord de robinetterie (1) selon la revendication 3, **caractérisé en ce que** les articulations tournantes (8) présentent une gamme de rotation allant jusqu'à 120 degrés d'angle, de préférence jusqu'à 90 degrés d'angle.

7. Raccord de robinetterie (1) selon la revendication 2, **caractérisé en ce que** les tubulures de raccordement (3) sont réalisées de manière à pouvoir pivoter avec une articulation sphérique, de préférence jusqu'à 90 degrés d'angle.

8. Raccord de robinetterie (1) selon l'une des revendications précédentes, **caractérisé en ce que** le corps de base (2) avec les tubulures de raccordement (3) est fabriqué en laiton, en bronze rouge ou en acier inoxydable.

9. Utilisation d'un raccord de robinetterie (1) selon l'une des revendications 1 à 8 pour des installations sanitaires.

10. Utilisation selon la revendication 9, **caractérisée en ce que** les installations sanitaires comprennent un raccordement d'eau froide et un raccordement d'eau chaude sur les tubulures de raccordement (3) respectives du raccord de robinetterie (1), ainsi qu'une, deux ou plusieurs sorties sur des tubulures de raccordement (3) respectives pour l'eau mélangée qui est fournie par une unité fonctionnelle avec vanne mélangeuse montée sur la zone de corps de base avec les surfaces d'ajustement (4) du raccord de robinetterie (1).

11. Utilisation selon la revendication 9 ou 10 pour des installations sanitaires encastrées dans des salles de bains pour des douches et/ou des baignoires.
